# EUROPÄISCHE PATENTSCHRIFT

(11) **EP 2 303 547 B1**
(45) Veröffentlichungstag und Bekanntmachung des Hinweises auf die Patenterteilung: **12.11.2014**
(21) Anmeldenummer: 09738131.3
(22) Anmeldetag: 28.04.2009
(51) Int. Cl.: B29C 49/42, C03B 35/04, B65G 47/51

(54) **ANLAGE UND VERFAHREN ZUR HERSTELLUNG VON BEHÄLTERN**
FACILITY AND METHOD FOR PRODUCING CONTAINERS
INSTALLATION ET PROCEDE DE FABRICATION DE CONTENANTS

(30) Priorität: 30.04.2008 DE 102008021527
(43) Veröffentlichungstag der Anmeldung: 06.04.2011
(73) Patentinhaber: Krones AG, 93073 Neutraubling (DE)
(72) Erfinder: HAHN, Wolfgang, 93073 Neutraubling (DE)
(74) Vertreter: Bittner, Bernhard
(86) Internationale Anmeldenummer: PCT/EP2009/055099
(87) Internationale Veröffentlichungsnummer: WO 2009/133087

(56) Entgegenhaltungen:
- EP-A- 1 837 157
- DE-A1-102006 035 109
- US-A- 5 996 322

## Beschreibung

Die vorliegende Erfindung betrifft ein Verfahren zur Störungsbeseitigung in einer Anlage zum Herstellen und Behandeln bzw. Bearbeiten von Behältern mit einer Behälterherstellungsvorrichtung zum Herstellen von Behältern und mindestens einer Behandlungsvorrichtung zum Weiterverarbeiten der Behälter nach dem Oberbegriff des Anspruchs 1 und eine Anlage mit einer Behälterherstellungsvorrichtung und mindestens einer Behandlungsvorrichtung zum Weiterverarbeiten der Behälter nach dem Oberbegriff des Anspruchs 8. Derartige Anlagen werden insbesondere bei der Herstellung und einer unmittelbar anschließenden Behandlung bzw. Bearbeitung von Behältern eingesetzt.

Im Stand der Technik sind Verfahren und Anlagen, d.h. mit hoher Bearbeitungsrate (ausgedrückt in der Anzahl der bearbeiteten bzw. behandelnden Behälter pro Zeiteinheit) bekannt, bei denen Behälter hergestellt werden durch Umformen von Vorformlingen aus einem thermoplastischen Material, die vor dem Umformen auf eine geeignete Umformungstemperatur erwärmt worden sind. Solche Anlagen und Verfahren werden in US5996322, EP 1 837 157 und DE 1 002 006 035 109 offenbart. Ein Herstellungsverfahren umfasst dementsprechend z.B. das Bevorraten von Vorformlingen, das Zuführen von Vorformlingen, das Erwärmen von Vorformlingen, das Umformen beispielsweise durch Blasformen von Vorformlingen, das Überführen bzw. Transportieren von Vorformlingen zwischen einem Vorrat und einer Heizvorrichtung und zwischen der Heizvorrichtung und einer Behälterumformungsvorrichtung, z.B. eine Blasformvorrichtung, und die Übergabe von Behältern an die anschließenden Behandlungsvorrichtungen.'Das Behandeln von Behältern kann einen oder mehrere Schritte umfassen, die ausgewählt sind aus einer Gruppe, die folgendes umfasst: Befüllen von Behältern, Sterilisieren von Behältern, Etikettieren, Beschriften und/oder Markieren von Behältern, Verschließen von Behältern, Sammeln und/oder Abführen von Vorformlingen oder Behältern, Verpacken von Behältern, Zusammenfassen von Behältern zu verkaufsfertigen Packungen und/oder transportierbaren Gebinden, Kombinationen hieraus oder dergleichen.

Die Erfindung ist insbesondere auch anwendbar in einer Anlage, bei der Störungen des regulären Betriebs mit größerer Häufigkeit in (einer) der Behandlungsvorrichtung(en) als in der Behälterherstellungsvorrichtung auftreten, und/oder in einer Anlage, bei der die mittlere Dauer einer störungsbedingten Betriebsunterbrechung in einer Behandlungsvorrichtung kürzer ist als die mittlere Dauer einer Betriebsstörung in einer Behälterherstellungsvorrichtung. Beispiele derartiger Störungen sind das Leerlaufen in der Zufuhr vorbedruckter Etiketten in Etikettiermaschinen, Zerstören von Behältern beim Aufsetzen eines Befüllungsstutzens mit zu hohem Druck oder in einer versetzten Position auf einer Behälteröffnung in einer Befüllungsvorrichtung, und, was relativ häufig auftritt, eine Unterbrechung der Zufuhr von Verschlüssen zum Verschließen des Behälters in einer Verschließvorrichtung.

In derartigen Anlagen sind die einzelnen Bearbeitungs- bzw. Behandlungsvorrichtungen im regulären, d.h. störungsfreien Betrieb häufig miteinander synchronisiert, d.h. sie sind operativ so miteinander gekoppelt, dass sie bezüglich der Anzahl der in einem Prozess bzw. Bearbeitungsschritt bearbeiteten Behältern pro Zeiteinheit in Synchronisation sind.

In derartigen Anlagen zum Herstellen und Bearbeiten von Behältern ist es bisher Stand der Technik, dass beim Auftreten einer Störung in einem Anlageteil bzw. in einer der Komponenten der Herstellungsvorrichtung oder einer Behandlungsvorrichtungen alle miteinander in Synchronisation betriebenen Vorrichtungen der Anlage gestoppt werden. Nachdem die Störung beseitigt ist, muss jede Vorrichtung wieder aus einem Stillstand auf einen für den regulären Betrieb erforderlichen Betriebszustand, einschließlich einer Produktionsgeschwindigkeit und ggf. weiteren Betriebsparametern, wie etwa Heiz- oder Verarbeitungstemperaturen, hochgefahren und miteinander synchronisiert werden. Auch wenn die Störung in einem Vorrichtungsblock mit einer kurzen Hochfahrzeit aufgetreten ist, wird für das wieder Hochfahren und das Synchronisieren der gesamte Anlage mindestens die Zeitdauer benötigt, die für das Hochfahren derjenigen Vorrichtung mit der längsten Hochfahrzeitdauer benötigt wird.

In Anlagen mit einer Behälterherstellungsvorrichtung, die eine Blasformvorrichtung zum Streckblasen von Vorformlingen aus thermoplastischen Kunststoff und eine vorgeschaltete Heizvorrichtung aufweist, besteht ein weiteres Problem darin, dass nach einem wieder Hochfahren der Anlage nach einer Betriebsstörung die sich in der Heizvorrichtung befindlichen Vorformlinge, z.B. durch ein vorübergehendes Abkühlen oder zu langen Aufenthalt in der Heizvorrichtung für die nachfolgende Verarbeitung, nicht mehr geeignet sind und deshalb aus der Heizvorrichtung ausgeleitet und entsorgt bzw. recycelt werden müssen. Ähnliches gilt auch für die sich in der Blasformvorrichtung befindlichen und noch nicht in Behälter umgeformten Vorformlinge, die bei Verbleib in der Blasformvorrichtung bis nach der Betriebsunterbrechung ebenfalls für die weitere Bearbeitung nicht mehr geeignet sind und bei Wiederaufnahme des regulären Betriebs aus der Vorrichtung ausgeleitet und entsorgt bzw. recycelt werden müssen.

Die Aufgabe der vorliegenden Erfindung ist es, die Probleme bei der Störungsbeseitigung in Anlagen zum Bearbeiten von Behältern zu vermeiden oder abzumildern. Insbesondere ist es eine Aufgabe, die Stillstandszeit nach einer Störung und einem durch die Störung verursachten Stopp einer in der Produktion eingesetzten Anlage zu verringern und dadurch eine längere Produktionszeit und einen höheren Wirkungsgrad zu erzielen. Eine weitere Aufgabe ist es, insbesondere in einer Anlage mit Blasformung, bei kurzen Störungen in einer nachfolgenden Behandlungsvorrichtung die Anzahl der aus der Heizvorrichtung und ggf. auch aus der Umformungsvorrichtung auszuleitenden Vorformlinge, d.h. die so genannten Vorformlingsverluste, und ebenso die Anzahl der aus der Umformungsvorrichtung auszuleitenden Behälter zu verringern.

Die Aufgaben werden gelöst durch ein Verfahren zur Störungsbeseitigung in einem Anlage zum Bearbeiten von Behältern nach dem Anspruch 1 und durch ein Anlage zum Bearbeiten von Behältern nach dem Anspruch 8. Vorteilhafte Ausgestaltungen des Verfahrens bzw. des Anlage sind in den abhängigen Ansprüchen beschrieben.

In einer Anlage zum Bearbeiten von Behältern mit einer Behälterherstellungsvorrichtung zum Herstellen von Behältern und mindestens einer der Behälterherstellungsvorrichtung nachfolgend angeordneten Behandlungsvorrichtung zum Weiterverarbeiten der Behälter,

wobei die Behälterherstellungsvorrichtung im regulären Betrieb mit der Behandlungsvorrichtung synchronisiert ist, umfasst das erfindungsgemäße Verfahren, dass die Synchronisation zwischen der Behälterherstellungsvorrichtung und der Behandlungsvorrichtung aufhebbar ist und insbesondere, dass beim Erkennen einer Störung in der Behandlungsvorrichtung die Synchronisation zwischen der Behälterherstellungsvorrichtung und der Behandlungsvorrichtung wenigstens zeitweise aufgehoben wird. Daneben oder alternativ kann es auch möglich sein, die Synchronisation zwischen der Heizvorrichtung und der Behälterumformungsvorrichtung wenigstens zeitweise aufzuheben.

Unter einer Störung werden dabei insbesondere bereits aufgetretene Störungen verstanden, es wäre jedoch eine Reaktion auf zukünftig auftretende Störungen denkbar, beispielsweise wenn der Benutzer erkennt, dass ein bestimmtes Maschinenverhalten oder ein bestimmter Ist-Zustand der Maschine oder der Bearbeitung künftig zu einer Störung führen wird.

Der dadurch erzielte Vorteil ist, dass durch das Aufheben der Synchronisation die Behälterherstellungsvorrichtung den Betrieb unabhängig von der Behandlungsvorrichtung weiterführen kann und die Störung in der Behandlungsvorrichtung bei durchgehend weiter betriebener Behälterherstellungsvorrichtung beseitigt werden kann. So wird das wieder Hochfahren der Behälterherstellungsvorrichtung vermieden, wenn eine Störung in einer der Behandlungsvorrichtungen aufgetreten ist. Bei einer Behälterherstellungsvorrichtung mit einer Blasformvorrichtung und einer vorgeschalteten Heizvorrichtung werden dadurch, insbesondere bei kurzen Störungen, geringere Vorformlingsverluste erreicht. Wenn die Störungsbeseitigung in der Behandlungsvorrichtung kürzer dauert als die Wiederhochfahrzeit der Behälterherstellungsvorrichtung, dann wird auch eine Verkürzung der Störungsbeseitigung, bzw. eine längere Produktionszeit bzw. ein höherer Wirkungsgrad erzielt.

Vorzugsweise werden die aufgeheizten Vorformlinge mit einer Überführungsvorrichtung aus der Heizvorrichtung an die Behälterumformungsvorrichtung übergeben und die Transportstrecke auf der die Vorformlinge aus der Heizvorrichtung an die Behälterumformungsvorrichtung übergeben werden, bleibt konstant. Im Gegensatz zu aus dem Stand der Technik bekannten Pufferungseinrichtungen, welche eine variable Strecke bzw. Staustrecke aufweisen und üblicherweise eine aufwändige Mechanik besitzen, wird hier eine Überführungsvorrichtung mit stets konstanter Transportstrecke verwendet, d.h. die Transportstrecke ist unabhängig von dem Maschinenbetrieb und insbesondere unabhängig von etwaigen auftretenden Fehlern konstant. Entsprechend werden die bereits umgeformten Behältnisse an eine weitere Behandlungseinheit übergeben und auch die Transportstrecke zwischen der Behälterumformungseinrichtung und den weiteren Behandlungseinheiten ist konstant.

Insbesondere, da die Behälterherstellungsvorrichtung eine Heizvorrichtung zum Aufheizen von Vorformlingen für die Behälter auf eine Umformungstemperatur und eine Behälterumformungsvorrichtung zum Umformen, zum Beispiel Blasformen, der Vorformlinge in Behälter umfasst, wobei die Heizvorrichtung und die Behälterumformungsvorrichtung im regulären Betrieb miteinander synchronisiert sind, kann beim Erkennen einer Störung in der Behandlungsvorrichtung diese stillgesetzt werden. Indem nur die Behandlungsvorrichtung stillgesetzt wird, kann die Behälterherstellungsvorrichtung ihren Betrieb fortsetzen, und dadurch das wieder Hochfahren nach einer Betriebsunterbrechung vermeiden und Vorformlingsverluste verringern.

Vorzugsweise kann auch beim Erkennen einer Störung in der Behandlungsvorrichtung eine Zufuhr von Vorformlingen in die Heizvorrichtung und/oder in die Behälterumformungsvorrichtung gesperrt werden. Das Sperren der Zufuhr von Vorformlingen zeitnah nach bzw. beim Erkennen einer Störung und während der zur Störungsbeseitigung benötigten Zeit verringert die Vorformlingsverluste in der Heizvorrichtung und der Behälterumformungsvorrichtung.

Vorzugsweise ist die Art eines Eingriffs durch den Benutzer vorgebbar. Falls beispielsweise der Benutzer oder die Maschine erkennt, dass er einen Fehler in kurzer Zeit, beispielsweise innerhalb 10 Sekunden beheben wird, wäre es ausreichend, lediglich eine vorgegebene Stückzahl an fertiggeblasenen Behältern auszuleiten und nach der Fehlerbehebung wieder einzuführen. Falls der Benutzer erkennt, dass die Behebung eines Fehlers mehr Zeit in Anspruch nimmt, kann zusätzlich beispielsweise auch die Zufuhr an Vorformen in die Heizeinrichtung angehalten werden. Vorzugsweise werden dem Benutzer in Abhängigkeit von einem Fehler Vorschläge für Reaktionen unterbreitet oder diese Reaktionen werden in Abhängigkeit von dem Fehler automatisch ausgeführt.

Vorzugsweise wird nach dem Erkennen einer Störung in der Behandlungsvorrichtung der Betrieb der Heizvorrichtung, beispielsweise der Heiz - und Transportbetrieb in der Heizvorrichtung, und/oder der Betrieb der Behälterumformungsvorrichtung, insbesondere ein Heizbetrieb im Falle einer Blasformvorrichtung sowie der Transportbetrieb fortgesetzt. Dadurch wird das wieder Hochfahren nach einer störungsbestimmten Betriebsunterbrechung der Heizvorrichtung und/oder der Behälterumformungsvorrichtung vermieden. Auch werden durch das Fortsetzen des Betriebs die Verluste von Vorformlingen verringert. Vorzugsweise werden zusätzlich die während der störungsbedingten Betriebsunterbrechung der Behandlungsvorrichtung hergestellten Behälter in einem Zwischendepot bzw. einer Sammelvorrichtung gesammelt.

Wenn beim Erkennen einer Störung in der Behandlungsvorrichtung die Zufuhr von Vorformlingen in die Heizvorrichtung und/oder in die Behälterumformungsvorrichtung gesperrt worden ist, können Vorformlinge aus der Heizvorrichtung ausgeschleust werden und/oder auch Vorformlinge oder Behälter aus der Behälterumformungsvorrichtung ausgeschleust werden. Dabei erfolgt ein derartiges Ausschleusen vorzugsweise unmittelbar nach dem Unterbrechen der Zufuhr von Vorformlingen.

Diese Maßnahmen tragen zur Qualitätssicherung bei, dadurch dass unter Störungsbedingungen aufgeheizte Vorformlinge und/oder frisch ausgebildete bzw. gerade umgeformte Behälter mit einer niedrigeren Qualität ausgesondert werden. Ebenso ermöglicht das Ausschleusen von Vorformlingen bzw. von Behältern, dass die Heizvorrichtung bzw. die Behälterumformungsvorrichtung beim wieder Hochfahren des Betriebes nach einer Störung frisch mit Vorformlingen befüllt werden können.

In weiter vorteilhafter Weise werden nach dem Sperren der Zufuhr von Vorformlingen in die Vorformlingheizvorrichtung und/oder in die Behälterumformungsvorrichtung die Temperaturen in diesen Vorrichtungen auf Betriebsniveau gehalten. Dadurch werden Wartezeiten für das Wiederaufheizen bei der Wiederaufnahme des Betriebes vermieden und somit die Betriebsunterbrechung verkürzt.

Anschließend an das wenigstens zeitweise Aufheben der Synchronisation kann die Störung in der Behandlungsvorrichtung beseitigt, die Behandlungsvorrichtung neu gestartet und der Neustart quittiert und dadurch die Behälterherstellungsvorrichtung über den Neustart informiert werden. Dies ermöglicht, dass zeitlich parallel bzw. wenigstens teilweise zeitgleich mit weiteren Schritten beim wieder Hochfahren der Behandlungsvorrichtung auch Vorbereitungen bzw. Schritte zur Wiederaufnahme des Betriebs der Behälterherstellungsvorrichtung ausgeführt werden können.

Ferner kann nach dem Beseitigen der Störung die Behandlungsvorrichtung bis zum Erreichen der Bearbeitungsreife der Behälterherstellungsvorrichtung hochgefahren und anschließend die Behandlungsvorrichtung mit der Behälterherstellungsvorrichtung synchronisiert werden. Insbesondere wenn die Wiederhochfahrzeit der Behandlungsvorrichtung kürzer ist als die der Behälterherstellungsvorrichtung, wird durch diese Schritte, die bei fortgesetztem Betrieb der Behälterherstellungsvorrichtung ausgeführt werden, Zeit für das wieder Hochfahren der gesamten Anlage eingespart.

Nach dem Schritt Quittieren des Neustarts der Behandlungsvorrichtung kann in der Behälterherstellungsvorrichtung bereits wieder die Zufuhr von Vorformlingen in die Heizvorrichtung und/oder die Zufuhr von aufgeheizten Vorformlingen in die Behälterumformungsvorrichtung aufgenommen werden. Ferner kann anschließend an das Synchronisieren der Behandlungsvorrichtung mit der Behälterbearbeitungsvorrichtung und beim Erreichen einer vollständigen Wiederbefüllung der Heizvorrichtung mit Vorformlingen die Zufuhr von Vorformen aus der Heizvorrichtung in die Behälterumformungsvorrichtung wieder aufgenommen werden. Dadurch, dass die vorgenannten Schritte in der Behälterherstellungsvorrichtung unmittelbar anschließend an das Quittieren des Neustarts der Behandlungsvorrichtung ausgeführt werden, können diese Schritte zeitgleich bzw. parallel zu den weiteren in der Behandlungsvorrichtung zur Wiederaufnahme des regulären Betriebs erforderlichen Schritte ausgeführt werden und dadurch Zeit beim wieder Hochfahren der Anlage eingespart bzw. die Stillstandszeit verkürzt werden.

Die Erfindung wird implementiert in einer Anlage zum Bearbeiten von Behältern mit einer Behälterherstellungsvorrichtung zum Herstellen von Behältern und mindestens einer der Behälterherstellungsvorrichtung in der Transportrichtung der Behälter nachfolgend angeordneten Behandlungsvorrichtung zum Weiterverarbeiten der Behälter, wobei die Anlage dazu ausgebildet ist, dass im regulären Betrieb die Behälterherstellungsvorrichtung mit der Behandlungsvorrichtung synchronisiert ist. Weiterhin weist die Behälterherstellungsvorrichtung eine Heizvorrichtung zum Erwärmen von Vorformlingen, sowie eine Überführungsvorrichtung zum Überführen aufgeheizter Vorformlinge aus der Heizvorrichtung in eine Behälterumformungsvorrichtung auf.

Erfindungsgemäß ist die Anlage dazu ausgebildet, dass im Betrieb die Synchronisation der Behälterherstellungsvorrichtung mit der Behandlungsvorrichtung zumindest teilsweise aufgehoben werden kann. Die Synchronisation kann insbesondere beim Erkennen einer Störung in der Behandlungsvorrichtung zumindest zeitweise aufgehoben werden. Vorzugsweise weist die Anlage eine Steuerungseinrichtung auf, welche diese Aufhebung der Synchronisation bewirkt, wobei die Aufhebung insbesondere auch im laufenden Produktionsbetrieb der Anlage möglich ist.

In einer derartigen Behälterherstellungsvorrichtung ist das Auftreten einer Störung des regulären Betriebsablaufs besonders nachteilig, weil die Handhabung der Vorformlinge in der Heizvorrichtung und der Behälterumformungsvorrichtung sehr kritisch und störungsempfindlich, insbesondere empfindlich gegenüber Abweichungen von einer Sollbetriebstemperatur ist. Dann ist das Aufheben der Synchronisation zwischen der Behälterherstellungsvorrichtung und der Behandlungsvorrichtung vorteilhaft, weil die Behälterherstellungsvorrichtung unabhängig von der Behandlungsvorrichtung weiterbetrieben werden kann und dadurch Verluste von unbrauchbar gewordenen Vorformlingen verringert werden können.

Vorzugsweise transportiert die Überführungsvorrichtung die Vorformlinge bzw. die fertiggestellten Behältnisse entlang einer konstanten Transportstrecke.

Vorzugsweise umfasst die Behälterherstellungsvorrichtung eine steuerbare Vorformlingausleitvorrichtung zum Ausleiten von Vorformlingen aus der Heizvorrichtung. Weiter bevorzugt umfasst die Anlage eine Überführungsvorrichtung und ferner eine Sperrvorrichtung zum Sperren der Zufuhr von Vorformlingen in die Behälterumformungsvorrichtung. Dabei kann die Anlage dazu ausgebildet sein, dass bei Erkennen einer Störung in der Behandlungsvorrichtung die Sperrvorrichtung und/oder die Vorformlingausleitvorrichtung aktiviert werden kann. Das Aktivieren der Sperrvorrichtung bzw. das Sperren der Zufuhr von Vorformlingen in die Behälterumformungsvorrichtung schützt die Behälterumformungsvorrichtung und vermeidet den Verlust von Vorformlingen oder gerade hergestellten Behältern. Das Aktivieren der Vorformlingsausleitungsvorrichtung bzw. das Ausleiten von Vorformlingen aus der Heizvorrichtung ermöglicht, dass die Heizvorrichtung beim wieder Hochfahren des Betriebes mit frischen Vorformlingen neu befüllt werden und damit die Qualität der Produkte und die Betriebssicherheit der weiteren Verarbeitungsschritte sichergestellt werden kann.

Die Anlage kann ferner eine steuerbare Vorratszuführvorrichtung zum Zuführen von Vorformlingen aus einer Bevorratungsvorrichtung in die Heizvorrichtung umfassen. Die steuerbare Vorratszuführvorrichtung ermöglicht, dass die Zufuhr aus dem Vorformlingsvorrat in die Heizvorrichtung zumindest zeitweise gesperrt werden kann, insbesondere beim Erkennen einer Störung in der Behandlungsvorrichtung. Dies verringert Verluste von Vorformlingen in der Heizvorrichtung während der Störungsbeseitigung in der Behandlungsvorrichtung.

Die Anlage kann ferner eine Übergabevorrichtung zum Übergeben von Behältern aus der Behälterherstellungsvorrichtung in eine erste auf die Behälterherstellungsvorrichtung nachfolgend angeordnete Behandlungsvorrichtung aufweisen. Die Übergabevorrichtung ermöglicht ein automatisches Übergeben von Behältern in die Behandlungsvorrichtung.

Die Anlage kann ferner eine steuerbare Ausleitvorrichtung zum Ausleiten von Behältern aus der Behälterumformungsvorrichtung aufweisen. Die steuerbare Ausleitvorrichtung ermöglicht das Ausleiten von Behältern und/oder Vorformlingen, die während der Störungsbeseitigung in der Behandlungsvorrichtung in der Behälterumformungsvorrichtung möglicherweise unbrauchbar geworden sind und ermöglicht ferner, dass die Behälterumformungsvorrichtung zur Wiederaufnahme des Betriebes nach einer Störung in der Behandlungsvorrichtung wieder frisch befüllt werden kann.

Die Anlage kann eine Behandlungsvorrichtung aus einer Gruppe von Vorrichtungen ausgewählt sein; welche Gruppe Befüllungsvorrichtungen zum Befüllen von Behältern, Etikettiervorrichtungen zum Etikettieren von Behältern, Verschließvorrichtungen zum verschließen von Behältern, Verpackungsanlagen, Palettierer, Kombinationen hieraus oder dergleichen umfassen. Die Verschließvorrichtung kann so ausgebildet sein, dass sie zum Verschließen des Behälters einen gesondert bereitgestellten und zugeführten Behälterverschluss heranführt und damit eine Behälteröffnung abdichtet und den Verschluss fest mit dem Behälter verbindet.

In der Praxis zeigt sich, dass in solchen Verschlussvorrichtungen relativ häufig Störungen auftreten, die jedoch in relativ kurzer Zeit beseitigt werden können, so dass gerade hier das Aufheben der Synchronisation der Behälterherstellungsvorrichtung von einer der Behandlungsvorrichtungen besonders vorteilhaft ist.

Die Befüllungsvorrichtung, die Etikettiervorrichtung und/oder die Verschließvorrichtung können, insbesondere bezüglich der Verarbeitungsrate, miteinander synchronisierbar sein. Dadurch lassen diese Vorrichtungen sich besonders leicht in die Anlage eingliedern.

Die Befüllungsvorrichtung, die Etikettiervorrichtung und/oder die Verschließvorrichtung können dazu ausgebildet sein, dass sie in Synchronisation miteinander hochfahrbar sind. Alternativ dazu können diese Vorrichtungen dazu ausgebildet sein, dass sie einzeln hochfahrbar und anschließend miteinander synchronisierbar sind. Durch diese Ausgestaltung ist das wieder Hochfahren bzw. das Aufsynchronisieren der Behandlungsvorrichtung mit der Behälterherstellungsvorrichtung steuerungstechnisch besonders leicht durchführbar.

Weitere vorteilhafte Ausführungsformen ergeben sich aus den beigefügten Zeichnungen. Darin zeigen:
- Fig.1: ein erfindungsgemäße Anlage zum Herstellen von Behältern; und
- Fig.2: ein Störungsbeseitigungsverfahren für die Anlage gem. Fig. 1.

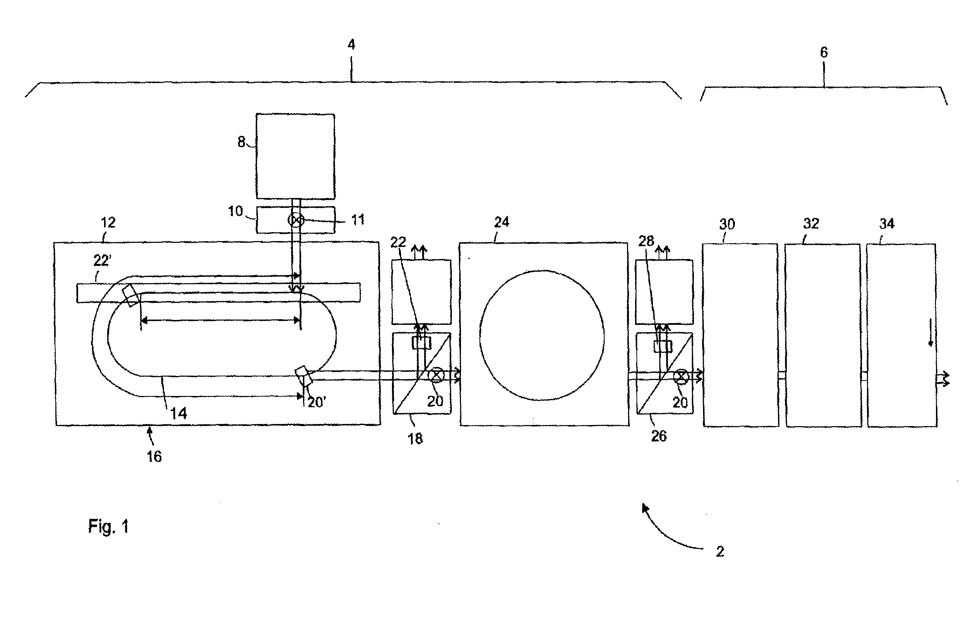

Die in Fig.1 gezeigte Ausführungsform ist eine Anlage 2 zur Herstellung und Weiterbehandlung von Behältern. Die Anlage 2 umfasst die im linken Teil der Fig. 1 gezeigte Behälterherstellungsvorrichtung 4 und die im rechten Teil der Fig. 1 gezeigte Behälterbearbeitungsvorrichtung 6. Die Behälterherstellungsvorrichtung 4 umfasst eine Bevorratungseinrichtung 8, eine Vorratszuführvorrichtung 10, und eine Heizvorrichtung 12 mit einem darin angeordneten Vorformtransport 14 und einem Aufheizbereich 16. Weiterhin ist eine Überführungsvorrichtung 18 zum Überführen von in der Heizvorrichtung 12 aufgeheizten Vorformlingen in eine nachfolgende Blasmaschine 24, die Blasmaschine 24 (Behälterumformungsvorrichtung), eine Vorformausleitvorrichtung 22 für ausgeleitete Vorformen, die steuerbar und operativ mit der Überführungsvorrichtung 18 gekoppelt ist, eine Übergabevorrichtung 26 zum Füller (Behälterbearbeitungsvorrichtung 6), eine Ausleitvorrichtung 28 für geblasene Behälter, die steuerbar und bevorzugt operativ mit der Überführungsvorrichtung 26 gekoppelt ist , sowie eine Nacheinanderschaltung von mehreren Behälterbearbeitungsvorrichtungen 6, nämlich der Befüllungsvorrichtung 30, einer Verschließvorrichtung 32 und einer Etikettiervorrichtung 34. Die hier dargestellte Reihenfolge der einzelnen Behandlungseinheiten ist jedoch nicht zwingend.

Im Betrieb der Anlage 2 werden Behältervorformlinge, im folgenden kurz Vorformlinge genannt, aus dem Vorformvorrat 8, beispielsweise durch ein Förderband, zu der Vorformvorratszufuhr 10 überführt, die die Vorformlinge einzeln, nacheinander und synchronisiert mit der Transportgeschwindigkeit des Vorformtransports 14 in die Heizvorrichtung 12 bzw. mit der Vorformlingsbearbeitungsrate der Heizvorrichtung 12 überführt, genauer gesagt in den Vorformtransport 14 in die Heizvorrichtung 12 einschleust. In der Heizvorrichtung 12 werden die Vorformlinge durch den Vorformtransport 14 mit konstanter Geschwindigkeit durch die Heizvorrichtung 12 mit ihren Bearbeitungsbereichen transportiert. Die Verarbeitungsbereiche der Heizvorrichtung 12 umfassen einen Einlaufbereich, in dem die Vorformlinge in einem vorbestimmten Abstand zum voraustransportierten und nachfolgend transportierten Vorformling gebracht werden, und den eigentlichen Aufheizbereich 16, dessen Länge und die darin bereitgestellte Temperatur so gewählt sind, dass die Vorformlinge im Aufheizbereich 16 auf eine bestimmte Temperatur für die weitere Verarbeitung aufgeheizt werden. Von einem Ende des Vorformtransports 14 in der Heizvorrichtung 12 werden die aufgeheizten Vorformlinge in eine Überführungsvorrichtung 18 übergeben bzw. transportiert, die im regulären Betrieb der Anlage 2 die aufgeheizten Vorformlinge in die Blasmaschine 24 einzeln, nacheinander und synchronisiert mit der Transportgeschwindigkeit bzw. der Bearbeitungsrate der Blasmaschine 24 einschleust bzw. überführt.

Die Überführungsvorrichtung 18 ist operativ mit der Vorformausleitvorrichtung 22 für auszuleitende Vorformen und der ansteuerbaren bzw. aktivierbaren Vorformsperre 20 gekoppelt. Die Vorformsperre 20 lässt im regulären Betriebszustand der Anlage 2 die Vorformlinge aus der Vorformüberführung 18 in die Blasmaschine 24 ungehindert hindurch und sperrt in einem angesteuerten bzw. aktivierten Zustand die Zuführung aufgeheizter Vorformlinge in die Blasmaschine 24. Wenn die Vorformsperre 20 aktiviert wird, wird auch die Vorformausleitvorrichtung 22 eingeschaltet bzw. aktiviert, um die bei gesperrter Vorformsperre 20 noch aus der Heizvorrichtung 12 auslaufenden aufgeheizten Vorformlinge auszuführen und einer Wiederverwendung bzw. einem Recyclingverfahren zuzuführen.

Das Bezugszeichen 11 bezieht sich auf eine weitere Vorformsperre, mit der die Zufuhr von Vorformen an die Heizvorrichtung unterbrochen werden kann. Das Bezugszeichen 20' zeigt eine weitere Vorformausleitvorrichtung, die in einem Teilbereich der Heizvorrichtung 12 angeordnet ist. Bei der Erwärmung der Vorformen ist es aufgrund von Kristallisationseffekten ab einem bestimmten Bereich der Heizvorrichtung nicht mehr möglich, diese wieder abkühlen zu lassen, um sie dann erneut zu verwenden. Die weitere Vorformausleitvorrichtung ist bevorzugt vor diesem Bereich angeordnet, um auf diese Weise auch eine Wiederverwertung eines Teils der bereits erwärmten Vorformen zu ermöglichen. Es ist möglich, sowohl die Vorformsperren 11 und 20 als auch die jeweiligen Vorformausleitvorrichtungen 22 und 20' unabhängig voneinander zu steuern. Auch die Behälterausleitvorrichtung 28 ist bevorzugt unabhängig von den Vorformausleitvorrichtungen 22, 20' steuerbar. Auf diese Weise ist es möglich, in genau angepasster Weise auf unterschiedliche Fehler bzw. unterschiedliche Ausfallzeiten zu reagieren.

In der Blasmaschine 24 werden die zugeführten und aufgeheizten Vorformlinge nacheinander und einzeln in Blasformen zu Behältnissen expandiert. Dann wird die Blasform geöffnet und der soeben ausgebildete Behälter aus der Blasform entfernt und aus der Blasmaschine 24 in eine Übergabevorrichtung 26 ausgegeben.

Die am Ausgang der Blasmaschine 24 angeordnete Übergabevorrichtung 26 transportiert bzw. übergibt aus der Blasmaschine 24 ausgegebene Behälter in die erste Vorrichtung aus einer Reihe möglicher nachfolgend angeordneter Behandlungsvorrichtungen 6, hier an die Befüllungsvorrichtung (Füller) 30. Mit dem Ausgang der Blasmaschine 24 bzw. der Übergabevorrichtung 26 ist die ansteuerbare bzw. aktivierbare Ausleitvorrichtung 28 operativ gekoppelt. Die Ausleitvorrichtung 28 bewirkt im aktivierten Zustand das Ausleiten von geblasenen Behältern aus der Blasmaschine 24. Im aktivierten Zustand führt die Ausleitvorrichtung 28 die aus der Blasmaschine 24 ausgeführten Behälter ab und einer Wiederverwendung, einem Recyclingverfahren zu und entlastet somit die nachgeschalteten Behandlungsvorrichtungen von der Zufuhr von Behältern, d.h. die Ausleitvorrichtung 28 unterbricht die Zufuhr von Behältern in die nachfolgenden Behandlungsvorrichtungen 6 (den Füller 30). Diese Unterbrechung ist in dem Fall erforderlich, wenn in einer der Behandlungsvorrichtungen 6, wie etwa der Befüllungsvorrichtung 30, der Verschließvorrichtung 32 und der Etikettiervorrichtung 34, eine Störung auftritt und diese betroffene Vorrichtung zur Störungsbeseitigung ganz oder teilweise von Behältern entleert werden muss.

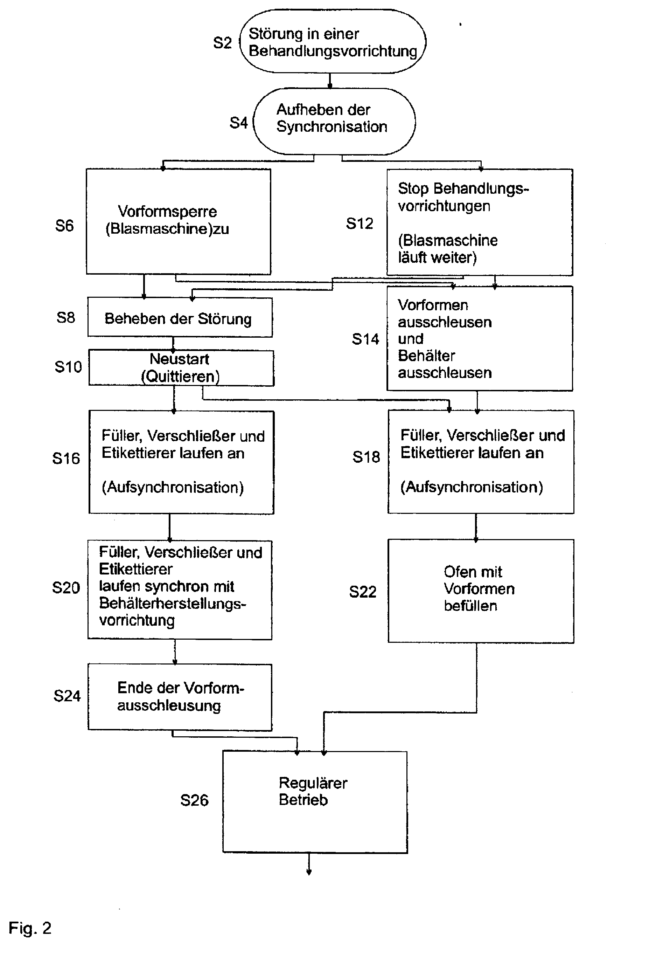

In Fig.2 wird eine Ausführungsform des erfindungsgemäßen Verfahrens, wie es in der in Fig.1 gezeigten Anlage 2 ausgeführt wird, gezeigt.

Wenn in einer der Bearbeitungsvorrichtungen 6 eine Störung auftritt und erkannt wird (Schritt S2), dann wird erfindungsgemäß die Synchronisierung bezüglich der Bearbeitungsrate, in Fachjargon "Blockung" genannt, zwischen den Komponenten der Behälterherstellungsvorrichtung 4 einschließlich des Ofens 12 und der Blasmaschine 24 einerseits und den Bearbeitungsvorrichtungen 6, d.h. dem Füller 30, Verschließer 32 und Etikettierer 34 aufgehoben (Schritt S4). Nach dem Aufheben der Synchronisierung im Schritt S4 laufen in der Behälterherstellungsvorrichtung 4 und in den Bearbeitungsvorrichtungen 6 getrennte, zeitlich teilweise gleichzeitig bzw. parallel, jedoch nicht miteinander synchronisierte Prozesse und Schritte zur Störungsbeseitigung und zur Wiederaufnahme des regulären Betriebs der Anlage ab.

Nach dem Erkennen der Störung (Schritt S2) und vorzugsweise unmittelbar nach dem Aufheben der Synchronisierung (Schritt S4) wird die Vorformsperre 20 aktiviert und damit die Zufuhr von in der Heizvorrichtung 12 aufgeheizten Vorformlingen in die Blasmaschine 24 unterbrochen (Schritt S6). Auch werden nach dem Aufheben der Synchronisierung (Schritt S4) eine, mehrere oder alle Behandlungsvorrichtungen 4 (Füller 30, Verschließer 32 und Etikettierer 34) gestoppt (Schritt S12). Es wäre auch möglich, mit der Vorformsperre 11 die Zufuhr von Vorformlingen in die Heizeinrichtung 12 zu sperren.

Während dem Ausführen der Schritte S6 und S8 läuft die Blasmaschine 24 weiter und auch die Heizvorrichtung 12 wird weiterbetrieben, insbesondere bleibt die Heizvorrichtung des Ofens eingeschaltet. Gleichzeitig oder unmittelbar anschließend an das Aktivieren der Vorformsperre 20 (Schritt S6) werden die Vorformausleitvorrichtung 22 zum Ausleiten von Vorformen aus der Heizvorrichtung 12 und die Ausleitvorrichtung 28 aktiviert, um geblasene Behältern aus der Blasmaschine 24 auszuleiten, und dadurch Vorformen aus der Heizvorrichtung 12 und Behälter aus der Blasmaschine 24 ausgeschleust (Schritt S14). Ebenfalls wird nach dem Verschließen der Vorformsperre 11 (Schritt S6), und nachdem die Ausleitvorrichtung 28 aktiviert (Schritt S14) und mithin die Zufuhr von Behältern in die Bearbeitungsvorrichtungen unterbrochen ist, in der betroffenen Bearbeitungsvorrichtung die Störung behoben (Schritt S8). Nachdem die Störung behoben ist, werden die Bearbeitungsvorrichtungen 6 einschließlich des von der Störung wieder befreiten neu gestartet, und der Neustart, beispielsweise vom Bediener oder auch automatisch, quittiert (Schritt S10).

Auf das Quittieren des Neustarts hin (Schritt S10) werden die Bearbeitungsvorrichtungen 6, d.h. Füller 30, Verschließer 32 und Etikettierer 34 wieder hochgefahren, wobei ihre Bearbeitungsraten gemäß einer vorbestimmten Zeitsteuerung zunehmen können (Schritt S18). Dieser Schritt wird auch Aufsynchronisation genannt.

Beim Erkennen der Quittierung des Neustarts (Schritt S10) oder zeitlich versetzt (nach der Synchronisierung) werden die Vorformvorratszufuhr 10 zum Ofen 12 und die Vorformsperre 20 zur Blasmaschine 24 wieder geöffnet (Schritt S16). Daraufhin wird der Ofen 12, und wenn dieser befüllt ist, auch die Blasmaschine 24 mit Vorformlingen frisch befüllt (Schritte S20, S22).

Wenn die Bearbeitungsvorrichtungen 6 die dem regulärem Betrieb entsprechende Bearbeitungsrate am Ende der Aufsynchronisation wieder erreicht haben, werden die Bearbeitungsvorrichtungen 6 mit der Blasmaschine 24 bzw. mit der gesamten Behälterherstellungsvorrichtung 4 wieder synchronisiert (Schritt S20).

Das Aufsynchronisieren der Bearbeitungsvorrichtungen 6 und Synchronisieren mit der Behälterherstellungsvorrichtung (Schritt S18) kann zumindest teilweise zeitgleich mit dem Öffnen der Vorratszufuhr 10 in den Ofen (Schritt S16) und dem Befüllen des Ofens 12 mit Vorformen (Schritt S20) erfolgen.

Es ist möglich, die Anlage 2 so zu betreiben, dass dem Ofen 12 an dessen Eingang bereits neue Vorformen zugeführt werden, während am Ofenausgang noch Vorformen durch die Vorformausleitvorrichtung 22 ausgeleitet werden, insbesondere dann, wenn die Störung in der betroffenen Arbeitsvorrichtung schnell beseitigt werden konnte und der reguläre Betrieb der Anlage 2 für eine Zeitdauer unterbrochen war, die kürzer als die Durchlaufzeit eines Vorformlings durch den Ofen 12 ist.

Wenn die Bearbeitungsvorrichtungen 6 wieder mit der Behälterherstellungsvorrichtung 4 wieder miteinander synchronisiert sind (Schritt S20), wird die Ausschleusung der Vorformen aus dem Ofen 12 beendet (Schritt S24) und die Vorformausleitvorrichtung 22 deaktiviert. Dadurch gelangen wieder Vorformlinge aus dem Ofen 12 in die Blasmaschine 24, so dass die Blasmaschine wieder befüllt wird (Schritt S22). Das Befüllen der Blasmaschine 24 dauert maximal so lange, wie für eine vollständige Umdrehung des Blasrads erforderlich ist. Nachdem die Blasmaschine 24 wieder befüllt ist (Schritt S22), werden an deren Ausgang wieder Behälter abgegeben und zur Bearbeitung in die bereits synchronisierte Bearbeitungsvorrichtung 6 (insbesondere in den Füller 30) überführt. Damit ist der reguläre Produktionsbetrieb wieder aufgenommen.

Im Betrieb von Anlagen, wie der in Fig.1 gezeigten, treten, wie oben erwähnt, Störungen relativ häufig beispielsweise im Verschließer 32 auf, z.B. aufgrund einem Stocken bzw. einer Unterbrechung in der Zufuhr der Verschlüsse auf. Die Beseitigung einer derartigen Störung (Schritt S8) dauert in einem Beispiel typischerweise etwa 20 Sekunden. Die Aufsynchronisation dauert etwa 4 Sekunden. Bei einer Bearbeitungsrate im regulären Betrieb der Anlage 2 von typischerweise 10 Behältern pro Sekunde ist der Vorformverlust bei dem in Fig.2 gezeigten erfindungsgemäßen Verfahren im Wesentlichen von der Zeitdauer für die Störungsbehebung (Schritt S8) abhängig. In der Ausführungsform der Fig.2 beträgt der Vorformverlust für eine Störung von 20 Sekunden und 4 Sekunden Aufsynchronisation, d.h. während einer Dauer von 24 Sekunden, während der die Vorformsperre 20 aktiviert ist, 240 Stück. Das vollständige Befüllen des Ofens dauert etwa 33 Sekunden und das vollständige Befüllen der Blasmaschine (eine Blasradrunde) ca. 4 Sekunden.

In dem gesamten, oben erwähnten Störungsbeseitungsverfahren aus dem Stand der Technik werden bei einer Störung in einer Behandlungsvorrichtung normalerweise zeitgleich die Vorformsperre geschlossen, alle Behandlungsvorrichtungen gestoppt und auch die Heizgeräte im Ofen ausgeschaltet. Anschließend wird die Störung in der betroffenen Behandlungsvorrichtung behoben und deren Neustart quittiert. Bei Annahme der gleichen Störung wie in Fig.2 dauern diese Vorgänge ca. 20 Sekunden.

Auf das Quittieren des Neustarts hin läuft die Blasmaschine mit einer minimalen Geschwindigkeit des Blasrads wieder an. Dann werden die Vorformlinge aus dem Ofen mit maximaler Laufgeschwindigkeit des Blasrads ausgeschleust, was einschließlich einer Rampe ca. 34 Sekunden dauert. Ab der Quittierung dauern diese Vorgänge ca. 40 Sekunden.

Danach werden die Heizgeräte im Ofen wieder eingeschaltet, der Ofen geht in einen Standby-Betrieb über, und erst wenn die vorbestimmte Heiztemperatur im Ofen erreicht ist, wird die Vorformsperre wieder geöffnet. Diese Vorgänge dauern ca. 15 Sekunden. Nach dem Öffnen der Vorformsperre wird der Ofen wieder mit Vorformen befüllt, was ca. 33 Sekunden dauert und anschließend die Blasmaschine wieder befüllt, was ca. 4 Sekunden dauert. Die Gesamtdauer aller dieser im Stand der Technik zur Störungsbeseitigung üblichen Vorgänge beträgt 112 Sekunden.

Im Vergleich zu dem Verfahren aus dem Stand der Technik erreicht man für das Störungsbeispiel mit dem erfindungsgemäßen Verfahren gemäß Fig.2 eine um 84 Sekunden kürzere Betriebsunterbrechung bzw. längere Produktion pro Störung, und mithin einen entsprechend höheren Wirkungsgrad aufgrund der längeren Produktionszeit. Auch erzielt man mit dem erfindungsgemäßen Verfahren bei kurzen Störungen in einer der Bearbeitungsvorrichtungen, in Abhängigkeit von der Zeitdauer für die Störungsbehebung, geringere Vorformverluste. In dem angegebenen Störungsbeispiel ist der Vorformverlust um 28% geringer als bei dem Verfahren nach dem Stand der Technik.

Dabei ist es bei dem in den Figuren veranschaulichten Verfahren auch möglich, dass nach einem Stop die Blasmaschine mit minimaler Geschwindigkeit (z.B. für eine Runde des Blasrads) fährt, um eventuell nicht geschlossene Formen nicht zu beschädigen. Das anschließende Leerfahren der Blasmaschine kann anschließend mit Produktionsleistung erfolgen. Vorzugsweise arbeitet die Blasmaschine mit Servotechnik.

## Patentansprüche

1. Verfahren zur Störungsbeseitigung und/oder Störungsvermeidung in einer Anlage (2) zum Bearbeiten von Behältern mit einer Behälterherstellungsvorrichtung (4) zum Herstellen von Behältern, wobei die Behälterherstellungsvorrichtung (4) eine Heizvorrichtung (12) zum Aufheizen von Vorformlingen für die Behälter auf eine Umformungstemperatur und eine Behälterumformungsvorrichtung (24) zum Umformen der Vorformlinge in Behälter umfasst und die Heizvorrichtung (12) und die Behälterumformungsvorrichtung (24) im regulären Betrieb in Synchronisation miteinander gekoppelt sind und mindestens einer der Behälterherstellungsvorrichtung (4) nachfolgende angeordneten Behandlungsvorrichtung (6) zum Welterverarbeiten der Behälter, wobei im regulären Betrieb die Behälterherstellungsvorrichtung (4) mit der Behandlungsvorrichtung (6) synchronisiert ist, **dadurch gekennzeichnet, dass** die Synchronisation zwischen der Behälterherstellungsvorrichtung (4) und der Behandlungsvorrichtung (6) wenigstens zeitweise aufhebbar ist, und bei Auftreten einer Störung in der Behandlungsvorrichtung (6) diese erkannt wird und dann die Synchronisierung bezüglich einer Bearbeitungsratezwischen Komponenten der Behälterherstellungsvorrichtung (4), einschließlich der Heizvorrichtung (12) und der Behälterumformungsvorrichtung (24), und der Behandlungsvorrichtung (6) aufgehoben wird, und wobei nach einem Stopp der Behälterumformungsvorrichtung (24) diese mit einer minimalen Geschwindigkeit fährt, um nicht geschlossene Behälter nicht zu beschädigen, wobei ein abschließendes Leerfahren der Behälterumformungsvorrichtung (24) mit einer Produktionsleistung erfolgt.

2. Verfahren nach Anspruch 1,
**dadurch gekennzeichnet, dass**
bei Erkennen oder Vorhersehen einer Störung in der Behandlungsvorrichtung (6) diese Behandlungsvorrichtung (6) wenigstens zeitweise stillgesetzt oder verlangsamt wird.

3. Verfahren nach wenigstens einem der vorangegangenen Ansprüche,
**dadurch gekennzeichnet, dass**
die aufgeheizten Vorformlinge mit einer Überführungsvorrichtung (18) aus der Heizvorrichtung (12) an die Behälterumformungsvorrichtung (24) übergeben werden und die Transport-strecke auf der die Vorformlinge aus der Heizvorrichtung (12) an die Behälterumformungsvorriohtung (24) übergeben werden, konstant bleibt.

4. Verfahren nach wenigstens einem der vorangegangenen Ansprüche,
**dadurch gekennzeichnet, dass**
eine Transportstrecke zwischen der Behälterumformungseinrichtung (24) und der nachfolgend angeordneten Behandlungsvorrichtung (6) konstant bleibt.

5. Verfahren nach einem der Ansprüche 1 - 4,
**dadurch gekennzeichnet, dass**
bei Erkennen oder Vorhersehen einer Störung in der Behandlungsvorrichtung (6) eine Zufuhr von Vortormlingen in die Heizvorrichtung (12) und/oder in die Behälterumformungsvorrichtung (24) unterbrochen wird.

6. Verfahren nach einem der Ansprüche 1 bis 4,
**dadurch gekennzeichnet, dass**
nach Erkennen einer Störung in der Behandlungsvorrichtung (6), der Betrieb der Heizvorrichtung (12), und/oder der Betrieb der Behälterumformungsvorrichtung (24) fortgesetzt wird.

7. Verfahren nach einem der Ansprüche 3-5,
**dadurch gekennzeichnet, dass**
nach dem Unterbrechen der Zufuhr von Vorformlingen in die Heizvorrichtung (12) und/oder in die Behälterumformungsvorrichtung (24) Vorformlinge nach der Heizvorrichtung (12) und/oder Behälter nach der Behälterumformungsvorrichtung (24) ausgeschleust werden.

8. Anlage (2) zum Bearbeiten von Behältern mit einer Behälterherstellungsvorrichtung (4) zum Herstellen von Behältern, wobei die Behälterherstellungsvorrichtung (4) eine Heizvorrichtung (12) zum Aufheizen von Vorformlingen für die Behälter auf eine Umformungstemperatur und eine Behälterumformungsvorrichtung (24) zum Umformen der Vorformlinge in Behälter sowie eine Überführungsvorrichtung (18) zum Überführen aufgeheizter Vorformlinge aus der Heizvorrichtung (12) In die Behälterumformungsvorrichtung (24) umfasst und mindestens einer der Behälterherstellungsvorrichtung (4) nachfolgend angeordneten Behandlungsvorrichtung (6) zum Weiterverarbeiten der Behälter, wobei die Anlage (2) dazu ausgebildet ist, dass die Behälterherstellungsvorrichtung (4) Im regulären Betrieb mit der Behandlungsvorrichtung (6) synchronisiert ist,
**dadurch gekennzeichnet, dass**
die Anlage (2) ferner dazu ausgebildet ist, dass im Betrieb, insbesondere beim Erkennen einer Störung in der Behandlungsvorrichtung (6), die Synchronisation der Behälterherstellungsvorrichtung (4) mit der Behandlungsvorrichtung (6) wenigstens zeitweise aufgehoben werden kann, und bei Auftreten einer Störung in der Behandlungsvorrichtung (6) diese erkennbar ist und dann die Synchronisierung bezüglich einer Bearbeitungsratezwischen Komponenten der Behälterherstellungsvorrichtung (4), einschließlich der Heizvorrichtung (12) und der Behälterumformungseinrichtung (24), und der Behandlungsvarrichtung (6) aufhebbar ist, und wobei nach einem Stopp der Behälterumformungsvorrichtung (24) diese mit einer minimalen Geschwindigkeit fahrbar ist, um nicht geschlossene Behälter nicht zu beschädigen, wobei ein anschließendes Leerfahren der Behälterumformungsvorrichtung (24) mit einer Produktionsleistung erfolgen kann.

9. Anlage (2) nach Anspruch 8,
**dadurch gekennzeichnet, dass**
die Überführungsvorrichtung (18) die Vorformlinge entlang einer konstanten Transportstrecke transportiert.

10. Anlage (2) nach wenigstens einem der vorangegangenen Ansprüche,
**dadurch gekennzeichnet, dass**
die Anlage (2) eine Übergabevorrichtung (26) zur Übergabe von Behältern von der Behälterumformungsvorrichtung (24) an die Behandlungseinrichtung (6) aufweist und diese Übergabevorrichtung (26) die Behälter entlang einer konstanten Transportstrecke transportiert.

11. Anlage nach Anspruch 8,
**dadurch gekennzeichnet, dass**
die Behälterherstellungsvorrichtung (4) eine steuerbare Vorformausleitvorrichtung (22) zum Ausleiten von Vorformlingen aus der Heizvorrichtung (12) aufweist.

12. Anlage nach Anspruch 9,
**dadurch gekennzeichnet, dass**
die Überführungsvorrichtung (18) ferner eine steuerbare Sperrvorrichtung (20) zum Sperren der Zufuhr aufgeheizter Vorformlinge in die Bahälterumformungsvorrichtung (24) aufweist.

13. Anlage nach einem der Ansprüche 8 bis 12,
**dadurch gekennzeichnet, dass**
die Anlage eine steuerbare Ausleitvorrichtung (28) zum Ausleiten von Behältern aus der Behälterumformungsvorrichtung (24) aufweist.

14. Anlage nach einem der Ansprüche 8 bis 11,
**dadurch gekennzeichnet, dass**
die mindestens eine Behandlungsvorrichtung (6) aus einer Gruppe von Vorrichtungen ausgewählt ist, welche Befüllungsvorrichtungen (30), Etikettiervorrichtung (34), Verschließvorrichtung (32). Verpackungsmaschinen, Palettierer, Kombinationen hieraus oder dergleichen umfasst.

## Claims

1. Method for eliminating faults and/or preventing faults in a facility (2) for processing containers having a container production device (4) for producing containers, wherein the container production device (4) comprises a heating device (12) for heating preforms for the containers to a transformation temperature and a container transformation device (24) for transforming the preforms into containers, and the heating device (12) and the container transformation device (24) are coupled in synchronisation with one another in regular operation, and at least one processing device (6) arranged downstream of the container production device (4) for further processing the containers, wherein the container production device (4) is synchronised with the processing device (6) in regular operation, **characterised in that** the synchronisation between the container production device (4) and the processing device (6) can be at least temporarily suspended and when a fault occurs in the processing device (6) it is detected and that then the synchronization with respect to the processing rate between components of the container production device (4) including the heating device (12) and the container transformation device (24) and the processing device (6) is annulated and wherein after a stop of the container transformation device (24), it operates with a minimal speed in order not to damage containers which are not closed, wherein a subsequent depletion of the container transformation device (24) with a production performance is carried out.

2. Method according to claim 1, **characterised in that**, when a fault in the processing device (6) is detected or foreseen, this processing device (6) is at least temporarily stopped or slowed.

3. Method according to at least one of the preceding claims, **characterised in that** the heated preforms are conveyed from the heating device (12) to the container transformation device (24) by means of a conveying device (18), and the transport path on which the preforms are conveyed from the heating device (12) to the container transformation device (24) remains constant.

4. Method according to at least one of the preceding claims, **characterised in that** a transport path between the container transformation device (24) and the downstream processing device (6) remains constant.

5. Method according to one of claims 1 to 4, **characterised in that**, when a fault in the processing device (6) has been detected or foreseen, a supply of preforms to the heating device (12) and/or to the container transformation device (24) is interrupted.

6. Method according to one of claims 1 to 4, **characterised in that**, when a fault in the processing device (6) is detected, the operation of the heating device (12) and/or the operation of the container transformation device (24) is continued.

7. Method according to one of claims 3 to 5, **characterised in that**, once the supply of preforms to the heating device (12) and/or to the container transformation device (24) has been interrupted, preforms are ejected after the heating device (12) and/or containers are ejected after the container transformation device (24).

8. Facility (2) for processing containers having a container production device (4) for producing containers, wherein the container production device (4) comprises a heating device (12) for heating preforms for the containers to a transformation temperature and a container transformation device (24) for transforming the preforms into containers, and also a conveying device (18) for conveying heated preforms from the heating device (12) into the container transformation device (24), and at least one processing device (6) arranged downstream of the container production device (4) for further processing the containers, wherein the facility (2) is configured in such a way that the container production device (4) is synchronised with the processing device (6) in regular operation, **characterised in that** the facility (2) is furthermore configured in such a way that during operation, in particular when a fault in the processing device (6) is detected, the synchronisation of the container production device (4) with the processing device (6) can be at least temporarily suspended and when a fault occurs in the processing device (6) it can be detected and that then the synchronization with respect to the processing rate between components of the container production device (4) including the heating device (12) and the container transformation device (24) and the processing device (6) can be annulated and wherein after a stop of the container transformation device (24) it can operate with a minimal speed in order not to damage containers which are not closed, wherein a subsequent depletion of the container transformation device (24) with a production performance can be carried out.

9. Facility (2) according to claim 8, **characterised in that** the conveying device (18) transports the preforms along a constant transport path.

10. Facility (2) according to at least one of the preceding claims, **characterised in that** the facility (2) has a transfer device (26) for transferring containers from the container transformation device (24) to the processing device (6), and this transfer device (26) transports the containers along a constant transport path.

11. Facility according to claim 8, **characterised in that** the container production device (4) has a controllable preform discharging device (22) for discharging preforms from the heating device (12).

12. Facility according to claim 9, **characterised in that** the conveying device (18) furthermore has a controllable barrier device (20) for blocking the supply of heated preforms to the container transformation device (24).

13. Facility according to one of claims 8 to 12, **characterised in that** the facility has a controllable discharging device (28) for discharging containers from the container transformation device (24).

14. Facility according to one of claims 8 to 11, **characterised in that** the at least one treatment device (6) is selected from a group of devices which includes filling devices (30), labelling device (34), closing device (32), packing machines, palletisers, combinations thereof or the like.

## Revendications

1. Procédé de dépannage et/ou de prévention des pannes dans une installation (2) pour le traitement de récipients avec un dispositif de fabrication de récipients (4) pour la production de récipients, ledit dispositif de fabrication de récipients (4) comprenant un dispositif de chauffage (12) destiné à chauffer les préformes pour les récipients à une température de formage et un dispositif de formage de récipients (24) pour transformer les préformes en récipients, le dispositif de chauffage (12) et le dispositif de formage de récipients (24) étant accouplés en synchronisation l'un avec l'autre en service normal, et au moins un dispositif de traitement (6) disposé en amont du dispositif de fabrication de récipients (4) pour le traitement des récipients, le dispositif de fabrication de récipients (4) étant synchronisé au dispositif de traitement (6) en service normal, **caractérisé en ce que** la synchronisation entre le dispositif de fabrication de récipients (4) et le dispositif de traitement (6) peut être suspendue au moins temporairement, et **en ce qu'**en cas de survenue d'une panne dans le dispositif de traitement (6), celle-ci est détectée et la synchronisation est alors suspendue quant à une vitesse de traitement entre des composants du dispositif de fabrication de récipients (4), incluant le dispositif de chauffage (12) et le dispositif de formage de récipients (24), et le dispositif de traitement (6), et **en ce qu'**après un arrêt du dispositif de formage de récipients (24), celui-ci est lancé à une vitesse minimale pour ne pas endommager des récipients bouchés, une marche à vide du dispositif de formage de récipients (24) ayant lieu ensuite avec un débit de production.

2. Procédé selon la revendication 1, **caractérisé en ce qu'**
en cas de détection ou de prévision d'une panne dans le dispositif de traitement (6), ledit dispositif de traitement (6) est arrêté au moins temporairement ou ralenti.

3. Procédé selon l'une des revendications précédentes, **caractérisé en ce que**
les préformes chauffées sont transférées par un dispositif de transfert (18) du dispositif de chauffage (12) au dispositif de formage de récipients (24), et **en ce que** le chemin de transport sur lequel les préformes sont transférées du dispositif de chauffage (12) au dispositif de formage de récipients (24) reste constant.

4. Procédé selon l'une des revendications précédentes, **caractérisé en ce qu'**
un chemin de transport entre le dispositif de formage de récipients (24) et le dispositif de traitement (6) situé en amont de celui-ci reste constant.

5. Procédé selon l'une des revendications 1 à 4, **caractérisé en ce qu'**
en cas de détection ou de prévision d'une panne dans le dispositif de traitement (6), une amenée de préformes vers le dispositif de chauffage (12) et/ou vers le dispositif de formage de récipients (24) est interrompue.

6. Procédé selon l'une des revendications 1 à 4, **caractérisé en ce qu'**
après la détection d'une panne dans le dispositif de traitement (6), le fonctionnement du dispositif de chauffage (12), et/ou le fonctionnement du dispositif de formage de récipients (24) sont poursuivis.

7. Procédé selon l'une des revendications 3 à 5, **caractérisé en ce qu'**
après l'interruption de l'amenée de préformes vers le dispositif de chauffage (12) et/ou vers le dispositif de formage de récipients (24), les préformes en aval du dispositif de chauffage (12) et/ou les récipients en aval du dispositif de formage de récipients (24) sont évacués.

8. Installation (2) pour le traitement de récipients avec un dispositif de fabrication de récipients (4) pour la production de récipients, ledit dispositif de fabrication de récipients (4) comprenant un dispositif de chauffage (12) destiné à chauffer les préformes pour les récipients à une température de formage et un dispositif de formage de récipients (24) pour transformer les préformes en récipients, ainsi qu'un dispositif de transfert (18) destiné à transférer les préformes chauffées du dispositif de chauffage (12) au dispositif de formage de récipients (24), et au moins un dispositif de traitement (6) disposé en amont du dispositif de fabrication de récipients (4) pour le traitement des récipients, ladite installation (2) étant réalisée de telle manière que le dispositif de fabrication de récipients (4) est synchronisé au dispositif de traitement (6) en service normal,
**caractérisée en ce que**
ladite installation (2) est en outre réalisée de telle manière qu'en cours de fonctionnement, en particulier en cas de détection d'une panne dans le dispositif de traitement (6), la synchronisation du dispositif de fabrication de récipients (4) avec le dispositif de traitement (6) peut être au moins temporairement suspendue, et **en ce qu'**en cas de survenue d'une panne dans le dispositif de traitement (6), celle-ci peut être détectée et la synchronisation peut alors être suspendue quant à une vitesse de traitement entre les composants du dispositif de fabrication de récipients (4), incluant le dispositif de chauffage (12) et le dispositif de formage de récipients (24), et le dispositif de traitement (6), et **en ce qu'**après un arrêt du dispositif de formage de récipients (24), celui-ci peut être lancé à une vitesse minimale pour ne pas endommager des récipients non-bouchés, une marche à vide du dispositif de formage de récipients (24) pouvant avoir lieu ensuite avec un débit de production.

9. Installation (2) selon la revendication 8, **caractérisée en ce que**
le dispositif de transfert (18) transporte les préformes sur un chemin de transport constant.

10. Installation (2) selon au moins une des revendications précédentes, **caractérisée en ce que**
ladite installation (2) comporte une installation de remise (26) destinée à remettre les récipients du dispositif de formage de récipients (24) au dispositif de traitement (6), et **en ce que** ladite installation de remise (26) transporte les récipients sur un chemin de transport constant.

11. Installation selon la revendication 8, **caractérisée en ce que**
le dispositif de fabrication de récipients (4) comporte un dispositif d'évacuation de préformes (22) pouvant être commandé pour évacuer des préformes hors du dispositif de chauffage (12).

12. Installation la revendication 9, **caractérisée en ce que** le dispositif de transfert (18) comporte en outre un dispositif d'arrêt (20) pouvant être commandé pour arrêter l'amenée de préformes chauffées vers le dispositif de formage de récipients (24).

13. Installation selon l'une des revendications 8 à 12, **caractérisée en ce que**
ladite installation comporte un dispositif d'évacuation (28) pouvant être commandé pour évacuer des récipients du dispositif de formage de récipients (24).

14. Installation selon l'une des revendications 8 à 11, **caractérisée en ce que**
le ou les dispositifs de traitement (6) sont sélectionnés dans un groupe comprenant des dispositifs de remplissage (30), un dispositif d'étiquetage (34), un dispositif de bouchage (32), des machines d'emballage, des palettiseurs, des combinaisons de ceux-ci ou d'équipements similaires.
